(19)

Europäisches
Patentamt
European
Patent Office
Office européen
des brevets

(11) **EP 2 106 154 A1**

(12) **EUROPEAN PATENT APPLICATION**

(43) Date of publication:
**30.09.2009 Bulletin 2009/40**

(51) Int Cl.:
***H04N 17/00*** (2006.01)

(21) Application number: **08153548.6**

(22) Date of filing: **28.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Deutsche Telekom AG**
**64307 Darmstadt (DE)**
• **Technische Universität Berlin**
**10623 Berlin (DE)**

(72) Inventors:
• **Raake, Alexander**
**10405 Berlin (DE)**
• **Garcia, Marie-Neige**
**10249 Berlin (DE)**
• **Möller, Sebastian**
**10405 Berlin (DE)**

(74) Representative: **Vossius & Partner**
**Siebertstraße 4**
**81675 München (DE)**

(54) **Audio-visual quality estimation**

(57) The invention relates to a method and a measurement system for estimating a quality of an audio-video signal. In particular, a audio-visual quality is computed, which provides a measure for the perceived quality of an audio-video signal. The apparatus and the method according to the invention preferably work without reference to the audio-video signal before transmission. Possible applications are network planning and service monitoring.

Fig. 2

EP 2 106 154 A1

**Description**

The invention relates to a method and a measurement system for estimating a quality of an audio-video signal. In particular, a audio-visual quality is computed, which provides a measure for the perceived quality of an audio-video signal. The apparatus and the method according to the invention preferably work without reference to the audio-video signal before transmission. Possible applications are network planning and service monitoring.

**STATE OF THE ART**

*Network planning*

A proposal for estimating the perceived audio, video and audio-visual quality during network planning is part of the framework of International Telecommunication Union Study Group 12 (ITU SG12 planned recommendations G.OMVS "Opinion Model for Video Streaming applications"). Video, audio and audio-visual qualities are predicted based on network assumptions like the chosen codecs, bit-rates and expected packet loss rates.

For speech services the E-Model (ITU-T Rec. G.107, 1995-2005) is known for estimating the perceived speech quality during network planning. It predicts the perceived speech quality based on the combinations of impairments which are the transformation of the physical degradations onto a perceptual scale.

*Service monitoring*

Audio-visual quality is commonly computed from the measured audio quality, the measured video quality and their interaction, as described in J. G. Beerends and F.E. Caluwe., "Relations between audio, video and audio-visual quality", 1997, N. Chateau, "Relations between audio, video and audiovisual quality," 1998 or in US-A-7197452. This latter US patent follows a signal-based approach by measuring the audio and video qualities on the audio and video signals themselves. The combination of the video and audio qualities depends on the degree of motion of the video signal. Degradations introduced by the network, like packet losses, and audio-visual synchronization are not considered. US-A-5596364 also provides a method for estimating the perceived audio-visual quality which takes into account the spatial and temporal activities of the video signal, i.e. the amount of details and motion complexity, but requires the transmission of features extracted from the signal before transmission as well as access to the destination signal, i.e. the receiving side, which involves decoding and reconstruction of the signal, which requires high computation power.

*Measurement of video quality and audio quality*

Quality measurement systems can be classified as follows:

- Full-Reference (FR): the measurement system requires access to a reference signal (source signal, assumed to have perfect quality).
- Reduced-Reference (RR): the system has access to partial information extracted from the source signal.
- Non-Reference (TR): the reference signal is not available.

A lot of FR and RR systems already exist, e.g., ITU J.144 for video, ITU-T Rec. P.862 "PESQ" for speech. However, for service monitoring, NR systems are the best and most realistic choice, since they do not require any reference signal. NR systems can be applied at different points in the network including the client, i.e., receiving side. For network planning, NR systems are used, since no signals are available during planning.

Most of the known NR systems are signal-based and provide an estimation of the quality as perceived by a human user by analysing the signal itself at the receiving side. Those systems require high computation power, at least for the video signal, since they have to decode and reconstruct the signal. Moreover, they do not take advantage of the analysis of the bit-stream already done by the decoder. These drawbacks can be circumvented with video quality measurement systems estimating the video quality based on a bit-stream analysis, as described in WO-A-2004/054274, which uses information at the video macro-block level.

**SUMMARY OF THE INVENTION**

The object of the present invention is to provide a method and a system for estimating a quality of audio-video signals.

The above object is achieved with the features of the appended claims.

The present invention allows improvements for answering the needs of evaluating the audio-visual quality of the diverse current and upcoming multimedia applications. Also, an adaptability to new types of degradations introduced by new technologies is possible. Since the impact of the degradations depends on the content types (audio content types: speech, music, etc.; video content: different types characterized by the amount of details, motion complexity, etc.) and on the correlation between the audio and video signals, the method and measurement system according to the present invention is taking into account the interaction between degradations and content types. The method and the system can adapt itself to the available data at the receiving side (e.g. encrypted / non-encrypted signal, access / non-access to features extracted from the source signal and sent to the destination, different levels of parsing of a bit-stream analyser).

According to the claimed method, the audio-visual quality is predicted based on estimated visual and audio quality factors of perceived quality and their interaction. The measurement system according to the invention may be capable of delivering different levels of information on the physical characteristics of the audio-video signal depending on the depth of analysis of the bit-stream.

The audio-visual quality measurement method and the system provide estimates of the audio-visual quality of an audio-visual signal, preferably transmitted over packet-based networks and/or reflecting human perception. The audio-visual quality is computed as a function of at least one of various audio and video quality factors (quality-factor-based approach). The audio-visual quality may also be computed as a combination of audio qualities, video qualities and their interaction (quality-based approach).

The quality-factor-based approach might be more suitable when some quality factors are predominant and drive the overall audio-visual quality. It may also better reflect the human perception and quality judgement process.

The audio and video qualities, the audio and video quality factors as well as the audio and video content descriptors are derived from the physical characteristics of the audio-video signal, including degradations occurring along the transmission of the audio-video signal.

For the quality-factor-based approach audio and video quality factors are deduced from audio and video physical characteristics. An audio-video quality factors interaction is computed from the interaction between the audio and video quality factors. An audio-video interaction quality is computed from the audio and video physical characteristics. The audio-visual quality is computed from the audio-video quality factors interaction and the audio-video interaction quality.

For the quality-based approach, video quality is computed as a combination of the video quality factors. This combination is depending on the video content descriptors, e.g. spatial and temporal activities, which is characterized by features extracted from different levels of the parsing of the bit-stream. Audio quality is computed as a combination of audio quality factors. This combination is depending on the audio content, e.g. speech, music, etc.

For both approaches the audio-visual quality estimation may be based on the analysis of a bit-stream, e.g. by a bit-stream parser, or on planning assumptions. Starting the analysis from planning assumptions parameters, which may correspond to the output of the bit-stream parser, have to be defined.

## BRIEF DESCRIPTION OF THE DRAWINGS

Fig. 1      shows a system overview of the audio-visual quality estimation method and measurement;
Fig. 2      shows a block diagram of the audio-visual quality estimation method;
Fig. 3      shows the measurement system and different bit-stream levels;
Fig. 4a     shows a block diagram of the quality based approach; and
Fig. 4b     shows a block diagram of the quality-factor-based approach.

## DETAILED DESCRIPTION OF THE INVENTION

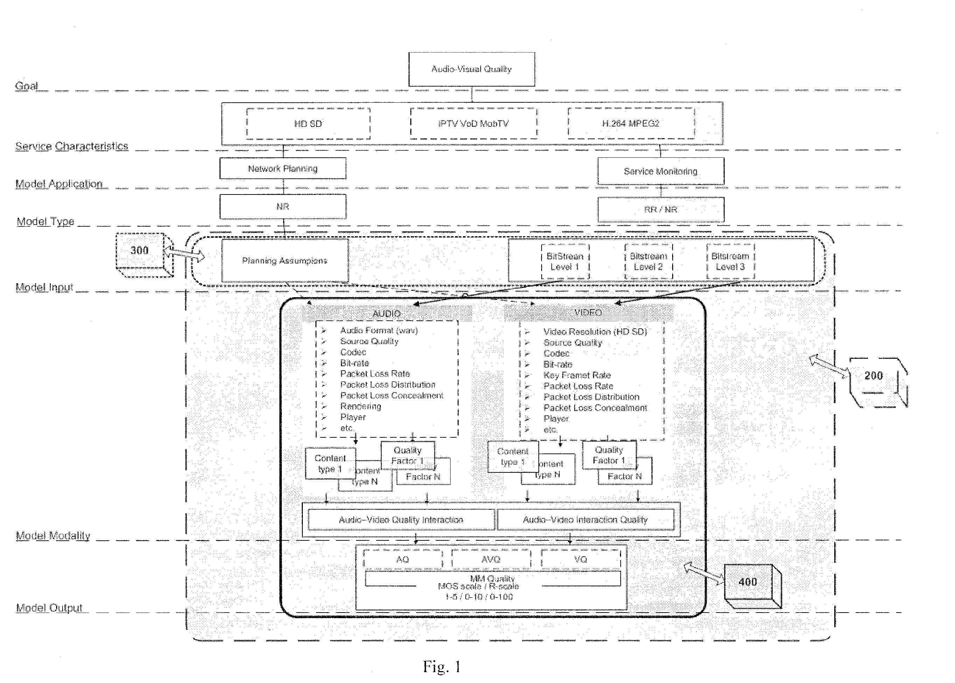

Figure 1 is an overview of the audio-visual quality measurement framework. It includes the considered applications, services, video resolutions, audio formats, video and audio codecs and introduces the method for measuring the audio quality, the video quality and the audio-visual quality for the considered services.

A goal audio-visual quality may be defined. Exemplary service characteristics are high definition (HD) or standard definition (SD) video formats; IPTV, VoD, MobTV; H.264, MPEG2. Depending on the model application, i.e. network planning or service monitoring, certain model types are applicable. In the case of network planning a NR model type is applicable. In the case of service monitoring a RR or a NR model type is applicable. Also, the model input depends on the model application. In the case of network planning, planning assumptions are utilized as model input. In the case of service monitoring the output of a bit-stream parser, preferably analyzing different bit-stream levels, can serve as the model input. Different bit-stream levels may be required for processing audio and video signals. As exemplarily shown in Figure 1 the video input may require bit-stream level 3, e.g. macroblock level, and audio input may require bit-stream level 1, e.g. IP header level. In the model audio and video content types and audio and video quality factors are derived and the audio-video quality interaction and the audio-video interaction quality are calculated. Also, the audio-video duality factors interaction may be computed. The audio, video and audio-visual qualities are output from the model.

In the context of packet-based non-interactive video services, various physical degradations occur along the transmission of audio-visual signals from the sender to the receiver. For video, degradations are for instance compression, packet loss or discard leading to freezing or slicing, and for audio, examples of degradations are compression, bandpass filtering during transmission or due to the electroacoustic interface, and interruptions caused by packet loss or discard.

Video and audio quality factors are due to the physical characteristics of the audio-video signal, including physical degradations of the audio-video signal occurring along its transmission. The physical characteristics of an audio-video signal are linked to the technical characteristics of the signal and of the end-to-end transmission path, from the sender to the receiver. Technical characteristics are specified when designing the video service. Physical characteristics have different effects on perceived quality. Most of the time they are degrading the signal, they are then called "physical degradations". They can also reduce the degradations (e.g. packet loss can be attenuated by PLC). Other type of physical characteristics like video resolution, audio format, display type, video size and audio rendering have also notable impacts in the perceptual domain and contribute to the overall perceived quality.

The transformed physical degradations onto the perceptual domain are referred to as quality impairments in the following. The transformed physical characteristics onto the perceptual domain are referred to as quality factors.

Examples of audio and video quality factors and their corresponding physical characteristics and technical characteristics (parameters) are given in the following table:

| Technical Characteristics Video Parameters | Physical Characteristics | Quality Factors |
|---|---|---|
| Codec | | |
| Bit-rate | Degree of compression | Blockiness / blurriness |
| Image resolution | Size and level of details of the image. | Impact of the size and level of details of the image on the perceived quality. Visibility of the other physical characteristics. Degree of immersion. |
| Mean Packet Loss Rate | Loss of video information | |
| Packet Loss Concealment | Freezing of image until next fully received frame available; Slicing, i.e. insertion of predicted information in parts of the picture to reduce the effect of the loss. | Freezing; Slicing |
| Packet Loss Distribution Characteristics | Influence distance between losses and duration of losses | |
| Technical Characteristics Audio Parameters | Physical Characteristics | Quality Factors |
| Codec | | |
| Bit-rate | Degree of compression | Brightness |
| Bandwidth | Freq. content reduction | Freq. content reduction |
| Mean Packet Loss Rate | Loss of audio information | |
| Packet Loss Concealment | Continuity | Continuity |
| Packet Loss Distribution Characteristics | Influence distance between losses and duration of losses | |

One quality factor can be generated by different physical characteristics. Perceived quality typically is of multidimensional nature. The perceptual event may be described by different attributes that are related with a set of underlying, orthogonal quality dimensions. Then, the quality related with a given set of physical parameters can be modelled as a linear or non-linear combination of the resulting quality dimensions and values on these dimensions. As a consequence, if the estimated quality is based on the combination of quality factors, the quality can still be estimated even with not-yet considered degradations, as long as those degradations are transformed into an already considered quality factor (for speech cf. Heute, U., Moller, S., Raake, A., Scholz, K.,"Waltermann, M., "Integral and Diagnostic Speech-"Quality Measurement: State of the Art, Problems, and New Approaches", in: Proc. 4th European Congress on Acoustics (Forum Acusticum 2005), HU-Budapest, pp.1695-1700.). This is a crucial point for estimating the quality of new technologies generating new types of degradations (not perceptual quality factors).

Another important point is the influence of the content on the perceived quality. The term "content" here designates the temporal and spatial complexity of the video, the type of content of the audio (speech, audio, noise) and the correlation between audio and video. Also descriptors may be used which provide a measure of the complexity of the video content and the type of content of the audio. A video descriptor may relate to the number of intracoded frames and/or predicted frames. The impact of the degradations on the overall perceived quality varies in function of the content, which may be represented by a content descriptor, so that the content has to be integrated in the computation of the estimation of the audio, video and audio-visual quality.

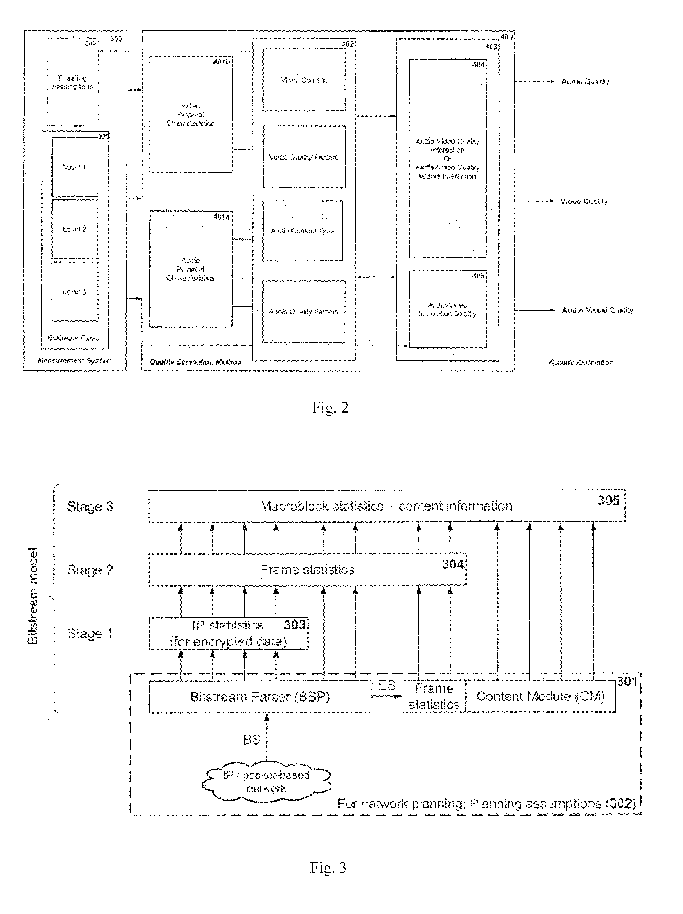

These observations lead to the approach shown in Fig. 2, which is an overview of the audio, video and audio-visual quality measurement systems and estimation method. It corresponds to block 200 as shown in Fig. 1. Contents and quality factors (block 402) are deduced from the audio and video physical characteristics (blocks 401a and 401b), which are either deduced from the analysis of the bit-stream (block 301) or given by planning assumptions (block 302). It is noted that the term content may also relate to a content descriptor. Video quality is estimated using information about the video content and video quality factors. Audio quality is estimated using information about the audio content and audio quality factors. Audio-video quality interaction or audio-video quality factors interaction (block 404) is deduced from the video and audio contents and video and audio quality factors. Audio-visual interaction quality (block 405) may be deduced from the video and audio contents and quality factors but also directly from the bit-stream analysis or network assumptions (block 300). Indeed, the bit-stream analysis or network assumptions indicate the status of the synchronization between audio and video, and information about the audio and video contents and quality factors indicate the impact of the de-synchronization, if any, on the perceptual quality.

Figure 3 shows the measurement of the audio and video qualities based on different levels of analysis (parsing) of the bit-stream. It corresponds to the block 300 of Fig. 1. As already mentioned, the impact of the quality factors on quality depends on the video and audio contents and on the correlation between the audio and the video signal. Information on the content can be deduced from the analysis of the bit-stream using a bit-stream parser (block 301). The bit-stream can be analyzed at different levels, depending on the required and available information. Those different levels match different steps of parsing the bit-stream. Main levels are IP-level (block 303), frame-level (block 304) and macroblock-level (block 305). For instance, in the case of encrypted video data, usually one has access to the IP header only. At this stage, depending on the encryption-level, it is possible to derive information like the coding bit-rate, the frame-rate, the packet loss rate and the codec type. With non-encrypted data, a deeper parsing of the bit-stream is possible. The bit-stream analyser can access the type of frame (I, P or B frame) so that, for example, the impact and propagation of errors can be predicted. A deeper parsing of the bit-stream at the slice and even macroblock level allows information relevant for characterizing the video content to be extracted, i.e. the amount of detail and complexity of motions. Macroblock-level information is, for example, the macroblock type (intra-coded, skipped, etc.), quantization parameter, transformed coefficients and motion vectors.

In the case of network planning, relevant information like bit rate, frame rate, codec, packet loss rate, packet loss concealment, packet loss distribution, content type and synchronization between audio and video are not measured but assumed based on the planned service layout.

### Audio-Visual Quality

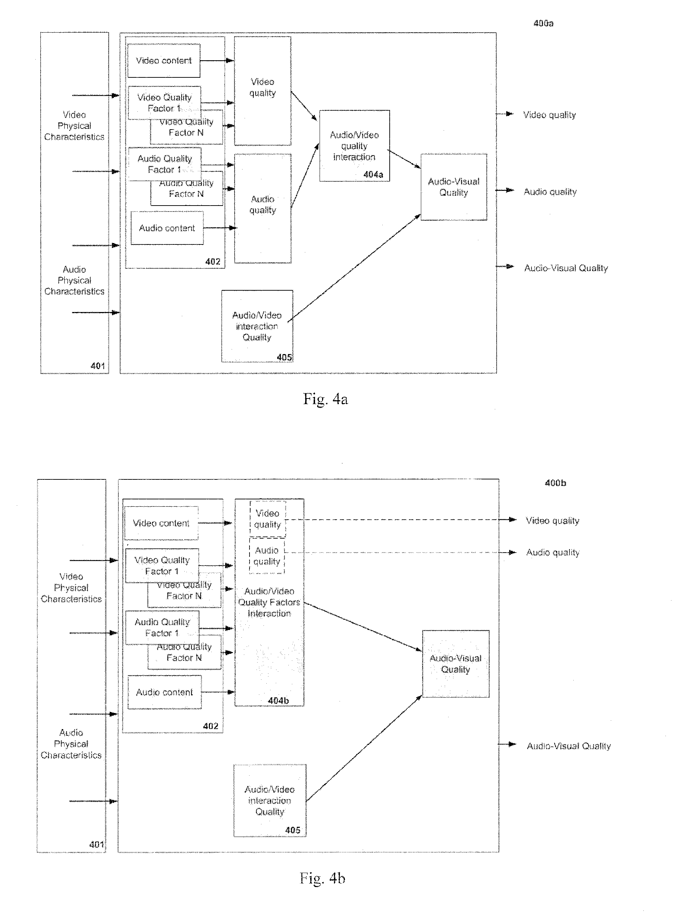

Figure 4 describes both the quality-based approach (Fig. 4a) and the quality-factor-based approach (Fig. 4b) for determining the audio-visual quality. It corresponds to the block 400 of Fig. 1.

The audio-visual quality can be estimated based on the audio and video quality factors and their interaction (quality-factor-based approach, described in Fig. 4b). Audio-visual quality can also be estimated based on the audio quality, the video quality and the interaction between audio and video quality (quality-based approach, described in Fig 4a).

In both approaches, video and audio contents, which may also be content descriptors, and quality factors (block 402) can be deduced from the measured (or assumed) video and audio physical characteristics (block 401). Video and audio qualities, preferably also an audio-video interaction quality, may then be computed from the individual audio and video contents and quality factors (block 402).

In the quality-based approach, the next step is to compute the interaction between the video and audio qualities (block 404a) as well as the quality of the interaction between audio and video, e.g. lip-synchronization (block 405). At last, the audio-visual quality is computed from the audio-visual quality interaction and the quality of the audio-visual interaction. Hence, audio-visual quality can be expressed as:

$$Rav = a + bRa + cRv + dRa \cdot Rv$$

Where *Rav*, *Ra* and *Rv* are respectively the (content-dependent) perceived audio-visual, audio and video quality ratings.

The dependency of audio-visual quality on the type of video and audio degradations can be captured by the quality-factor-based approach. Indeed, in this approach, the audio-visual quality is directly computed from the audio and video quality factors (block 402), their interaction (block 404b) as well as the audio-video interaction quality (block 405). The video and audio contents may also be considered when computing the audio-visual quality. This leads to the following expression of the audio-visual quality:

$$Rav = Rav,o + f(\boldsymbol{Fv}) + g(\boldsymbol{Fa}) + h(\boldsymbol{Fv \cdot Fa})$$

Where *Rav,o* is the quality rating for the source signal (i.e. before any modification occurs), *f*, *g*, and *h* are functions representing the combination of the video quality factors from the set **Fv,** the audio quality factors from the set **Fa** and the interaction between video and audio quality factors **Fv·Fa.** The operator "·" relates to a multiplication.

### Video and audio qualities

Video and audio qualities *Rv* and *Ra* are estimated based on the combination of video and audio quality factors. This is expressed as follow:

$$Rv = Rv,o + fv(\boldsymbol{Fv})$$

$$Ra = Ra,o + fa(\boldsymbol{Fa})$$

Where *Rv,o* is the video source quality and *Ra,o* is the audio source quality, and *fv* and *fa* are functions of the combination of video quality factors from the set **Fv** and audio quality factors from the set *Fa*, respectively.

### In the context of Internet Protocol TeleVision (IPTV)

*Video and audio qualities:*

In the context of IPTV, High Definition (HD, 1920x1080 pixels) and Standard Definition (SD, 720x576 pixels) video formats, H.264 and MPEG2 video codecs, and based on the results of subjective video tests, the following video quality formula can be obtained:

$$Rv = Rv\_o + Fv\_res + Fv\_cod + Fv\_tra + Fv\_dis \quad (1)$$

Here, Rv_o is the video source quality, *Fv_res* is the impact due to the picture size, *Fv_cod* is the impairment caused by the video compression, *Fv_tra* the quality impact due to packet loss and packet loss concealment, and *Fv_dis* the impact due to the display. The video quality rating *Rv* ranges from 0 to 100.

In the context of IPTV, wav audio format, AAC, HEAAC, MP2 and MP3 audio codecs and based on the results of subjective audio tests, the following audio quality formula can be obtained:

$$Ra = Ra\_o + Fa\_cod + Fa\_tra + Fa\_dis \qquad (2)$$

Where $Ra\_o$ is the audio source quality, $Fa\_cod$ is the impairment caused by the audio compression, $Fa\_tra$ is the quality impact due to packet loss and packet loss concealment, and $Fa\_dis$ the impact due to the audio display. The audio quality rating $Ra$ ranges from 0 to 100.

$Fx\_cod$ (x=a: audio, x=v: video) is a function of the respective audio and video bit rates, and $Fx\_tra$ is a function of the bit-rate and the packet loss rate:

$$Fx\_cod = a1 \cdot \exp(a2 \cdot bitrate) + a3 \qquad (3)$$

$$Fx\_tra = (b0 - Fx\_cod) \cdot Ppl / (b1 + Ppl) \qquad (4)$$

Coefficients involved in the above equations take different values, depending on the used codec, packet loss concealment, packet loss distribution (e.g. random loss and bursty loss) and content type.

For instance, with HD format, H.264 and MPEG2 codecs, for video the following can be obtained:

- Rv_o + Fv_res + Fv_dis = 97.8061
- For H264: $a1$=65.6339; $a2$=-0.2834; $a3$=6.0367; In the case of freezing: $b0$ = 84.8166; $b1$=0.1334; In the case of slicing: $b0$=72.892; $b1$=$c1$+$c2$/$bitrate$; $c1$=0.09026; $c2$=1.384.
- For MPEG2: $a1$=52.0725; $a2$= 0.118; $a3$=14.8075; In the case of freezing: $b0$=84.8; $b1$=0.1334; In the case of slicing: $b0$=89.6376; $b1$=$c1$+$c2$/$bitrate$; $c1$=0.188; $c2$=2.6;

Using those coefficients in equations (3) and (4), equation (1) leads to a correlation with subjective ratings of p = 0.981 and an RMSE of 4.269.

For audio, with the AAC, HEAAC, MPEG -1 Layer 2 (MP2) and MPEG-1 Layer 3 (MP3) audio-c.odecs:

- Ra_o + Fa_dis = 87.85
- For AAC: $a1$ = 515.6566; $a2$ = -0.0704; $a3$ = 0; $b0$ = 45; $b1$ = 7;
- For IIEAAC: $a1$ = 15.8604; $a2$ = -0.0178; $a3$ = 0; $b0$ = 58; $b1$ = 10;
- For MP2: $a1$ = 295.062; $a2$ = -0.0259; $a3$ = 0; $b0$ = 67; $b1$ = 2;
- For MP3: $a1$ = 252.19915; $a2$ = -0.0365; $a3$ = 0; $b0$ = 74; $b1$ = 0.65;

Using those coefficients in equations (3) and (4), equation (2) leads to a correlation with subjective ratings of ρ = 0.995 and an RMSE of 1.977.

*Audio-visual quality*

In the context of IPTV, and HD video formats, H.264 video codec, wav audio format, AAC audio codec, and based on the results of subjective audio tests, video tests and audio-visual tests, the following audio-visual quality formula can be obtained:

Quality-based approach:

$$Rav = 19.56 + 0.194 \cdot Rv + 0.007 \cdot Ra \cdot Rv$$

which leads to a correlation with the perceived audiovisual quality of ρ = 0.9732 and a Root Mean Square Error (RMSE) of 4.369.

Quality-factor-based approach:

$$Rav = 87.75 + 0.623 \cdot Fv\_cod + 0.323 \cdot Fa\_tra + 0.615 \cdot Fv\_tra - 0.002 \cdot Fa\_cod \cdot Fv\_cod - 0.005 \cdot Fa\_cod \cdot Fv\_tra$$

which leads to a correlation with the perceived audiovisual quality of 0.96 and an RMSE equal to 4.74.

*Conversion into 5-point Mean Opinion Score (MOS) scale and 11-point MOS scale:*

Audio, video and audio-visual qualities are computed using a "psychological" scale, ranging from 0 to 100, on which the quality factors are supposed to be additive.

For comparison with results of other audio-visual quality measurement systems or subjective tests, it might be useful to convert values on the 0-100 scale into values on the more common 5-point (ITU-T P.800) and 11-point (ITU-T P.910) MOS scales.

Conversion from the 0-100 scale to the 5-point MOS scale is described in Annex B of the E-Model (ITU-T Rec. G.107).

Conversion from the 5-point MOS scale (MOS_5) to the 11_point MOS scale (MOS_11) is computed as follows:

$$MOS\_11 = (MOS\_5 - 1) \cdot 10/4$$

While certain embodiments have been chosen to illustrate the invention it will be understood by those skilled in the art that changes and modifications can be made therein without departing from the scope of the invention as defined in the appended claims.

**Claims**

1.   A method for estimating a quality of an audio-video signal, said method comprising the following steps:

   (a) deducing audio and video quality factors from audio and video physical characteristics;
   (b) computing an audio-video quality factors interaction from the interaction between the audio and video quality factors;
   (c) computing an audio-video interaction quality from the audio and video physical characteristics;
   (d) computing an audio-visual quality from the audio-video quality factors interaction and the audio-video interaction quality.

2.   Method according to claim 1, wherein step (a) further comprises deducing audio and video content descriptors and wherein in step (c) the audio-video interaction quality is computed from the audio and video physical characteristics and the audio and video content descriptors.

3.   Method according to claim 2, further comprising the step:

   (e) computing a video quality based on a video content descriptor and at least one video quality factor.

4.   A method according to claim 2 or 3, further comprising the step:

   (f) computing an audio quality based on an audio content descriptor and at least one audio quality factor.

5.   Method according to any of the preceding claims, wherein audio and video content descriptors and quality factors from audio and video physical characteristics are deduced based on a bit-stream analysis.

6.   Method according to claim 5, wherein the audio and/or video content descriptors are deduced based on an analysis at different levels of the bit-stream.

7. Method according to claims 5 or 6, wherein the bit-stream is analyzed at at least one of the IP-level, frame-level and/or macroblock-level.

8. Method according to any of claims 1 to 4, wherein audio and video content descriptors and quality factors from audio and video physical characteristics are deduced based on given planning assumptions.

9. Method according to any of the preceding claims, wherein the audio physical characteristic is at least one of the audio format, audio rendering, degree of compression, frequency content reduction, loss of audio information, continuity, influence distance between losses and duration of losses.

10. Method according to any of the preceding claims, wherein the video physical characteristic is at least one of the video resolution, display type, video size, degree of compression, size and level of details of an image, loss of video information, freezing of image until next fully received frame available, slicing, influence distance between losses and duration of losses.

11. Method according to any of the preceding claims, wherein video quality factors are at least one of blockiness, blurriness, impact of the size and level of details of the image on the perceived quality, freezing, and slicing.

12. Method according to any of the preceding claims, wherein audio quality factors are at least one of brightness, frequency content reduction, and continuity.

13. Method according to any of the preceding claims, wherein the video content descriptors designate the spatial and temporal complexity.

14. Method according to any of the preceding claims, wherein the audio content descriptors designate the type of content, preferably either speech and/or music.

15. Method according to any of the preceding claims, wherein video quality factors relate to the impact due to the video compression and/or packet loss and/or packet loss concealment and/or display.

16. Method according to any of the preceding claims, wherein audio quality factors relate to the impact due to the audio compression and/or packet loss and/or packet loss concealment and/or audio display.

17. Method according to any of the preceding claims, wherein the audio-video signal is transmitted over a packet-based network.

18. Method according to any of the preceding claims, wherein the bit-stream is analyzed with reference to the audio-video signal before transmission.

19. Apparatus for estimating a quality of an audio-video signal, said apparatus comprising:

   (a) deduction means for deducing audio and video quality factors from audio and video physical characteristics;
   (b) means for computing an audio-video quality factors interaction from the interaction between the audio and video quality factors;
   (c) means for computing an audio-video interaction quality from the audio and video physical characteristics;
   (d) means for computing an audio-visual quality from the audio-video quality factors interaction and the audio-video interaction quality.

20. Apparatus according to claim 19, wherein the deduction means is further capable of deducing audio and video content descriptors and wherein the means for computing the audio-video interaction quality is adapted to compute the audio-video interaction quality from the audio and video physical characteristics and the audio and video content descriptors.

21. Apparatus according to claim 20, further comprising a means for computing a video quality based on a video content descriptor and at least one video quality factor.

22. Apparatus according to claim 20 or 21, further comprising a means for computing an audio quality based on an audio content descriptor and at least one audio quality factor.

**23.** Apparatus according to any of claims 19 to 22, wherein the deduction means is a bit-stream parser.

**24.** Apparatus according to any of claims 19 to 23, further comprising means for delivering different levels of information on the physical characteristics of the audio-video signal, preferably depending on the depth of analysis of the bit-stream.

Fig. 1

Fig. 2

Fig. 3

Fig. 4a

Fig. 4b

**European Patent Office**

## PARTIAL EUROPEAN SEARCH REPORT

which under Rule 63 of the European Patent Convention shall be considered, for the purposes of subsequent proceedings, as the European search report

Application Number

EP 08 15 3548

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/01165 A (BRITISH TELECOMM [GB]; HOLLIER MICHAEL PETER [GB]) 6 January 2000 (2000-01-06) * abstract; figures 1,2 * * pages 1-7 * ----- | 1-7,9-24 | INV. H04N17/00 |
| A | ARAYAMA Y ET AL: "Fugoka Parameter to Packet Sonshitsu o Koryo shita AV Tsushin Hinshitsu no Suitei Model (Opinion model for audio-visual communication quality from quality parameters by coding and packet loss)" DENSHI JOHO TSUSHIN GAKKAI GIJUTSU KUNKYU HOKOKU - IEICETECHNICAL REPORT, DENSHI JOHO TSUSHIN GAKKAI, TOKYO, JP, vol. 105, no. 406, 1 November 2005 (2005-11-01), pages 57-60,ABSTR., XP003016988 ISSN: 0913-5685 * abstract * * pages 58,60; figure 1 * ----- -/-- | 1-7,9-24 | |

|  |  |  | TECHNICAL FIELDS SEARCHED (IPC) |
|---|---|---|---|
|  |  |  | H04N H04L |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 28 July 2008 | Löser, Eberhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

# EP 2 106 154 A1

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| X | EP 1 244 312 A (BRITISH TELECOMM [GB]) 25 September 2002 (2002-09-25) * abstract; figure 1 * * paragraphs [0001] - [0009] * ----- | 1-7,9-24 | |
| X | JP 2005 244321 A (NIPPON TELEGRAPH & TELEPHONE) 8 September 2005 (2005-09-08) * abstract; figure 1 * * paragraphs [0014], [0015] * ----- | 1-7,9-24 | |
| X | JP 2006 074333 A (NIPPON TELEGRAPH & TELEPHONE) 16 March 2006 (2006-03-16) * abstract * * paragraphs [0003], [0020] - [0027], [0037] - [0044] * ----- | 1-7,9-24 | |
| X | BEERENDS J G ET AL: "THE INFLUENCE OF VIDEO QUALITY ON PERCEIVED AUDIO QUALITY AND VICE VERSA" JOURNAL OF THE AUDIO ENGINEERING SOCIETY, AUDIO ENGINEERING SOCIETY, NEW YORK, NY, US, vol. 47, no. 5, 1 May 1999 (1999-05-01), pages 355-362, XP000835402 ISSN: 1549-4950 * the whole document * ----- | 1-7,9-24 | TECHNICAL FIELDS SEARCHED (IPC) |
| A | JP 2006 324865 A (NIPPON TELEGRAPH & TELEPHONE) 30 November 2006 (2006-11-30) * abstract; figures 1,4 * * paragraphs [0027], [0033] - [0036] * ----- | 1-7,9-24 | |
| A | JP 08 289333 A (NIPPON TELEGRAPH & TELEPHONE) 1 November 1996 (1996-11-01) * abstract; figures 1,2 * * paragraphs [0009] - [0011], [0020] * ----- | 1-7,9-24 | |
| | -/-- | | |

EPO FORM 1503 03.82 (P04C10)

**European Patent Office**

**PARTIAL EUROPEAN SEARCH REPORT**

Application Number

EP 08 15 3548

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | DE 10 2005 040301 A1 (DEUTSCHE TELEKOM AG [DE]) 1 March 2007 (2007-03-01) * abstract; figures 1,2 * * paragraphs [0009] - [0032]; claims 1,2 * ----- | 1-7,9-24 | |
| | | | **TECHNICAL FIELDS SEARCHED** (IPC) |

EPO FORM 1503 03.82 (P04C10)

European Patent
Office

**INCOMPLETE SEARCH
SHEET C**

Application Number

EP 08 15 3548

```
Claim(s) searched completely:
      1-7,9-24

Claim(s) not searched:
      8

Reason for the limitation of the search:

lack of clarity and of technical content
```

**EP 2 106 154 A1**

## ANNEX TO THE EUROPEAN SEARCH REPORT
## ON EUROPEAN PATENT APPLICATION NO.

EP 08 15 3548

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2008

| Patent document cited in search report | | Publication date | Patent family member(s) | | Publication date |
|---|---|---|---|---|---|
| WO 0001165 | A | 06-01-2000 | AU | 4379799 A | 17-01-2000 |
| | | | DE | 69911964 D1 | 13-11-2003 |
| | | | DE | 69911964 T2 | 09-09-2004 |
| | | | JP | 2002519960 T | 02-07-2002 |
| | | | US | 7015947 B1 | 21-03-2006 |
| EP 1244312 | A | 25-09-2002 | CA | 2440274 A1 | 03-10-2002 |
| | | | WO | 02078358 A1 | 03-10-2002 |
| | | | JP | 4064821 B2 | 19-03-2008 |
| | | | JP | 2004523978 T | 05-08-2004 |
| | | | US | 2004068398 A1 | 08-04-2004 |
| JP 2005244321 | A | 08-09-2005 | JP | 4027330 B2 | 26-12-2007 |
| JP 2006074333 | A | 16-03-2006 | NONE | | |
| JP 2006324865 | A | 30-11-2006 | NONE | | |
| JP 8289333 | A | 01-11-1996 | NONE | | |
| DE 102005040301 | A1 | 01-03-2007 | WO | 2007022803 A1 | 01-03-2007 |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7197452 A
- US 5596364 A
- WO 2004054274 A

**Non-patent literature cited in the description**

- **J. G. Beerends ; F.E. Caluwe.** *Relations between audio, video and audio-visual quality,* 1997
- **N. Chateau.** *Relations between audio, video and audiovisual quality,* 1998
- **Heute, U. ; Moller, S. ; Raake, A. ; Scholz, K. ; Waltermann, M.** Integral and Diagnostic Speech-''Quality Measurement: State of the Art, Problems, and New Approaches. *Proc. 4th European Congress on Acoustics,* 2005, 1695-1700